# EUROPEAN PATENT APPLICATION

(11) **EP 4 230 703 A1**
(43) Date of publication of application: **23.08.2023**
(21) Application number: 23157639.8
(22) Date of filing: 20.02.2023
(51) Int. Cl.: C09D 5/00, B05D 3/00, C09D 7/61, C09D 133/04, C09D 163/00, C09D 175/04, E04B 1/62, B05D 7/00, C04B 28/34

(54) **COATING SYSTEM**

(30) Priority: 18.02.2022 NL 2031008
(71) Applicant: Allshield Holding B.V., 2913 LV Nieuwerkerk aan den Ijssel (NL)
(72) Inventor: LEENDERTSE, Krijn Dingenus Karel, 2913 LV Nieuwerkerk aan den IJssel (NL); DIJKHUIZEN, Robbert Alexander, 2913 LV Nieuwerkerk aan den IJssel (NL)
(74) Representative: V.O.

(57) **Abstract**

The invention relates to a coating system, a protective coating, a coating method, an object, an adhesive primer material, and to an insulation assembly.

The coating system comprises:
- an adhesive primer material comprising an oxygen-containing magnesium compound; and
- a curable protective coating material comprising a phosphate compound and an alkaline metal compound.

## Description

The invention relates to the field of coatings. In general, the invention relates to coatings suitable for use in architecture and construction. The invention also relates to an adhesive primer. More in particular, the invention is directed to a coating system, to a protective coating, to a method of coating a surface, to an object comprising a protective coating, to an adhesive primer material, and to an insulation assembly.

The invention relates to a coating system that can be used in architecture and construction. The coating system is particularly suitable in infrastructure and building construction, including residential and non-residential buildings. More in particular, the coating system can be used to provide protection to roofs and facades.

In construction applications, such as facades; floors; walls; roofs; roads; pipes; and the like, it is desirable to have a coating that provides protection from, for example, water, fire, corrosion, environmentally induced deterioration, *etc.* Protective coatings in architecture and construction are typically applied by first applying an adhesive to a surface, before applying a protective coating. Adhesives provide adhesion to surfaces that are otherwise not or weakly adhesible, by allowing mechanical bonding (anchoring effect), physical interaction (intermolecular forces), and/or chemical interaction (covalent and hydrogen bonding).

US-A-2002/0 009 622 discloses sprayable phosphate cementitious coatings, which coatings are produced by providing a first cementitious constituent; providing a second cementitious constituent to produce a phosphate cement coating; spraying the surface with the first cementitious constituent; spraying the surface with the second cementitious constituent; and reacting the first and second cementitious constituents to produce a phosphate cement coating.

CN-A-113 896 504 discloses a phosphorus-magnesium cementitious material/polymer composite coating, wherein the coating comprises from bottom to top, an undercoat layer formed from a phosphorus-magnesium cementitious material and a polymer emulsion, and a middle coat layer of the phosphorus-magnesium cementitious material. The topcoat is closed with the polymer emulsion, and the magnesium ions in the middle coat and the phosphate ions in the base coat are neutralised to form a struvite hydration crystal network structure.

WO-A-2015/169806 discloses an overcoatable primer coating composition comprising (i) a solvent-borne epoxy functional acrylic binder formed from glycidyl methacrylate and at least one further ethylenically unsaturated monomer; and (ii) a crosslinker comprising polyamine.

WO-A-2020/233806 is directed to a barrier comprising a cured phosphate composition and a glass fibre scrim, wherein the glass fibre scrim is capable of reducing the pH of demineralised water having a pH of 7 to a pH of 6.3 or lower, when assessed in accordance with ISO 3071:2005, said barrier having a thickness of at least 1 mm.

There remains a need in the art for a coating system that can be used in various architectural and construction applications, and exhibits excellent adhesion and/or ease of processing and application. It is an objective of the invention to address this need in the art.

The inventors surprisingly found that this objective can, at least in part, be met by providing an adhesive primer material comprising an oxygen-containing magnesium compound and combining this adhesive primer material with a curable protective coating material that comprises a phosphate compound and an alkaline metal compound.

Accordingly, in a first aspect, the invention is directed to a coating system, comprising:
- an adhesive primer material comprising an oxygen-containing magnesium compound; and
- a curable protective coating material comprising a phosphate compound and an alkaline metal compound.

The coating system comprises at least two components, an adhesive primer material and a curable protective coating material. The adhesive primer material is to be applied to a surface in order to prime the surface after which the curable protective coating material is applied on the adhesive primer material. The curable protective coating material comprises two components, *i.e.* a component with the phosphate compound and a component with the alkaline metal compound. When combined, these components form a strong network. The inventors found that when an oxygen-containing magnesium is comprised in an underlying primer, the adhesive strength of the primer is significantly improved.

In accordance with the invention, the adhesive primer material comprises an oxygen-containing metal compound, specifically an oxygen-containing magnesium compound.

The oxygen-containing magnesium compound may comprise one or more selected from the group consisting of metal oxides, metal hydroxides, metal carbonates, or metal alcoholates. Preferably, the oxygen-containing magnesium compound comprises one or more selected from the group consisting of magnesium oxide, magnesium hydroxide, magnesium carbonate, and magnesium alcoholates. Preferably, the oxygen-containing magnesium compound comprises magnesium oxide, magnesium hydroxide and/or a magnesium alcoholate. More preferably, the oxygen-containing magnesium compound comprises magnesium oxide and/or magnesium hydroxide, especially magnesium hydroxide.

The inventors found that by using oxygen-containing magnesium compounds, such as those disclosed herein, and in particular magnesium hydroxide, the adhesive primer material is provided with improved adhesion properties. This is especially the case when a phosphate compound and an alkali metal compound are present in a curable protective coating material, that is to be applied to the adhesive primer material. Without wishing to be bound by any theory, the inventors believe that the oxygen-containing magnesium compound interacts with the phosphate compound, thereby establishing a chemical bond.

The adhesive primer material is a primer material that is suitable to provide adhesive properties. By definition, a primer material is a material that is used in priming a surface. Such primer materials are typically applied to a relevant surface in order to prime the surface for further treatment. The adhesive primer material is designed to promote adhesion between the surface and the protective coating.

The adhesive primer material may comprise 5 % or more of the oxygen-containing magnesium compound by total weight of the adhesive primer material. In particular, the amount of oxygen-containing magnesium compound in the adhesive primer material may be 7 % or more by total weight of the adhesive primer material, such as 9 % or more, 11 % or more, or 13 % or more. The amount of oxygen-containing magnesium compound in the adhesive primer material may be 50 % or less by total weight of the adhesive primer material, such as 48 % or less, 46 % or less, or 44 % or less. Preferably, the amount is 10 % or more by total weight of the adhesive primer material, such as 15-45 %, 20-40 %, or 25-35 %. More preferably, the amount is 20 % or more, such as 30-40 %.

The adhesive primer material may further comprise one or more resins. The one or more resins can be selected from synthetic resins. The synthetic resins can be, for example, selected from polyethylene, polyvinyl chloride, polystyrene, polyvinyl acetate, polypropylene, poly(meth)acrylic acid, acrylonitrile butadiene styrene, phenolic resins, urea formaldehyde resin, epoxy resins, unsaturated polyesters, polyurethane resins, silicone resins, and the like. In particular, the adhesive primer material may comprise one or more resins selected from the group consisting of acrylic resins, epoxy resins and polyurethane resins. Preferably, the adhesive primer material comprises one or more acrylic resins and/or one or more polyurethane resins.

The adhesive primer material can further comprise one or more additives. The additives can be selected from the group consisting of fillers, retarders, surfactants, plasticisers, anti-settling agents, rheology modifiers, wetting agents, matting agents, pigments, dyes, suspending agents, anti-foaming agents, and the like.

The adhesive primer material may comprise an amount of 0.5 % or more of the one or more additives by total weight of the adhesive primer material. The amount can be 2 % or more by total weight of the adhesive primer material, such as 5 % or more, 10 % or more, or 20 % or more. The amount of the one or more additives can be 60 % or less by total weight of the adhesive primer material, such as 55 % or less, 45 % or less, or 35 % or less. In particular, the amount may be 50 % or less, such as 2-40 % or 10-30 %. Preferably, the amount is 5 % or more, such as 5-40 % or 10-35 %.

Suitable fillers include wollastonite, talc, fly ash, kaolin clay, kaolinite, meta kaolin, mullite, calcium aluminate minerals, calcium silicate minerals, aluminium silicate minerals, calcium aluminium silicate minerals, limestone quartz sand, barite, perlite, diatomaceous earth, vermiculite, foamed sand, and the like.

Suitable retarders include alkali metal fluorides, alkali metal stannates, borax, and the like.

Suitable anionic surfactants include perfluorooctanoate, perfluorooctane sulphonate, sodium dodecyl sulphate, ammonium lauryl sulphate, alkyl sulphate salts, sodium lauryl ether sulphate, alkyl benzene sulphonate, fatty acid salts, and the like. Suitable cationic surfactants include cetyl trimethylammonium bromide, alkyl trimethylammonium salt, cetylpyridinium chloride, polyethoxylated tallow amine, benzalkonium chloride, benzethonium chloride, and the like. Suitable amphoteric surfactants include dodecyl betaine, cocamidopropyl betaine, cocoamphoglycinate, and the like. Suitable non-ionic surfactants include alkyl poly(ethylene oxide), alkylphenol poly(ethylene oxide), poloxamers or poloxamines (copolymer of polyethylene oxide or polypropylene oxide), octyl glucoside, decyl maltoside, cetyl alcohol, oleyl alcohol, dodecyl dimethylamine oxide, and the like.

Suitable plasticisers include phthalates, trimellitates, aliphatic dibasic esters, phosphates, epoxides, polyesters, and the like.

Suitable anti-settling agents include soy lecithin, aluminium stearate, stearate coated calcium carbonate, modifier castor oil or fatty acids, pine oil, methyl ethyl ketoxime, diisobutylene maleic dispersion, ammonium polyacrylate, modified soy lecithin emulsion, polycaprolactonepolyol-polyethyleneimine block copolymer, polycaprolactonepolyol-toluene-diisocyanate copolymer, polyhydroxystearic acid, alkyd-based anti-settling agents, and the like.

Suitable rheology modifiers and suspending agents include hydrated magnesium aluminium silicate, lignosulphonates, salts of sulphonated naphthalene sulphonate condensates, salts of sulphonated melamine sulphonate condensates, beta naphthalene sulphonates, sulphonated melamine formaldehyde condensates, naphthalene sulphonate formaldehyde condensate resins, polyaspartates, oligomeric dispersants, polymethacrylate salts, guar gum, diutan gum, welan gum, xanthan gum, and the like.

Suitable anti-foaming agents include silicon-based antifoam oil, acetylene glycol surfactants, and poly (octyl acrylates).

The adhesive primer material can comprise any commercially available adhesive material, especially any adhesive primer. Alternatively, the adhesive primer material is a commercially available (or store-bought) adhesive material, to which the oxygen-containing magnesium compound as described in this disclosure is added. The magnesium compound may be added in such amounts as described herein. The magnesium compound can, for example, be added in slurry form or solid form, such as powder form. An advantage of adding the oxygen-containing magnesium compound in solid form, especially powder form, is that the components of the adhesive material are less diluted than when added in, for example, slurry form. The oxygen-containing magnesium compound and the adhesive material may be mixed with a high shear disperser at, for example, 1500-2000 rotations per minute for 5 to 10 min to yield the adhesive primer material.The amount of adhesive primer material used is typically such that at least a covering layer of adhesive primer material is applied onto a surface. The skilled person is able to determine the optimal amount, also depending on the type of primer material used.

The curable protective coating material comprises a phosphate compound. The phosphate compound may be an acidic phosphate compound. In particular, the phosphate compound may be a salt of a phosphoric acid, such as an orthophosphate, a hydrogen phosphate or a dihydrogen phosphate. Suitable examples include ammonium phosphates, potassium phosphates, phosphoric acid, calcium phosphates, magnesium phosphates, aluminium phosphates, zinc phosphates, sodium phosphates, and combinations thereof. Preferably, the phosphate compound comprises one or more selected from the group consisting of ammonium phosphates, potassium phosphates, and sodium phosphates.

The curable protective coating material further comprises an alkaline metal compound. The alkaline metal compound can comprise one or more selected from alkali metals, alkaline earth metals and transition metals. In particular, the alkaline metal compound comprises one or more selected from the group consisting of alkali metals and alkaline earth metals. The alkali metal compound can comprise one or more alkaline earth metals, including magnesium, calcium, zinc, and aluminium. Preferably, the alkali metal compound comprises magnesium.

The alkaline metal compound can be selected from the group consisting of metal oxides, metal hydroxides, metal carbonates, or metal alcoholates. In particular, the alkaline metal compound may be selected from metal oxides, metal hydroxides and metal alcoholates. Preferably, the alkaline metal compound is a metal hydroxide.

The alkaline metal compound may be an alkaline magnesium compound. The alkaline magnesium compound is preferably magnesium oxide, magnesium hydroxide or a magnesium alcoholate. More preferably, the alkaline magnesium compound is magnesium oxide or magnesium hydroxide, especially magnesium hydroxide. The alkaline metal compounds, in particular such alkaline magnesium compounds, and especially magnesium hydroxide have a relatively high solubility in acid environments, which ensures a fast cure speed. Such fast cure speed is advantageous for typical applications of the invention.

The combination of the alkaline metal compound and the phosphate compound may comprise magnesium oxide and/or magnesium hydroxide, and ammonium phosphate and/or potassium phosphate. In particular, the combination comprises at least magnesium hydroxide, and may further comprise potassium phosphate.

The curable protective coating material may comprise 5 % or more of the phosphate compound and alkaline metal compound combined, based on the total weight of the curable protective coating material. The amount of phosphate compound and alkaline metal compound combined in the curable protective coating material can be 7 % or more by total weight of the curable protective coating material, such as 9 % or more, 11 % or more, 13 % or more, or 15 % or more. The amount of phosphate compound and alkaline metal compound combined in the curable protective material can be 35 % or less by total weight of the curable protective coating material, such as 33 % or less, 31 % or less, 29 % or less, or 27 % or less. Preferably, the amount is 10 % or more, such as 12-30 %, or 15-25 %.

The weight ratio between the alkaline metal compound and the phosphate compound in the curable protective coating material can range from 1 : 3 to 6 : 1, such as from 1 : 2 to 5 : 1, from 1 : 3 to 3 : 1, from 1 : to 2 : 1, or from 1 : 1 to 4 : 1. In an embodiment, the weight ratio ranges from 1 : 1 to 5 : 1, such as from 2 : 1 to 4 : 1, or from 3 : 1 to 5 : 1. An excess of the alkaline metal compound compared to the phosphate compound is advantageous to mechanical strength. Typically, the molar ratio between the alkaline metal compound and the phosphate compound can range from 1 : 1 to 6 : 1, such as from 1.5 : 1 to 5 : 1, or from 2 : 1 to 4 : 1. The weight ratio and molar ratio can be used to tune the properties of the curable protective coating material. Typically, however, the alkaline metal compound is kept at a stoichiometric higher amount compared to the phosphate compound. This has the advantage that the cured protective coating material is substantially free of residual acid.

The protective coating material is curable, preferably water-curable. For example, upon exposure to water, the alkaline metal compound and the phosphate compound undergo an acid-base reaction to produce a cementitious product, also known as (metal) phosphate cement. For example, in the case of an alkaline magnesium compound, the cured protective coating material can comprise one or more selected from the group consisting of MgNH₄PO₄·6H₂O (struvite), Mg₃(PO₄)₂·4H₂O, MgHPO₄·3H₂O (newberyite), MgNH₄PO₄·H₂O (dittmarite), Mg(NH₄)₂H₂(PO₄)₂·4H₂O (schertelite), (NH₄)₂Mg₃H₄(PO₄)₄·8H₂O (hannayite), NaNH₄HPO₄·4H₂O (stercorite), MgKPO₄·6H₂O (struvite-K), and Mg(OH)₂. Preferably, the cured coating material comprises one or more selected from the group consisting of MgNH₄PO₄·6H₂O (struvite), MgNH₄PO₄·H₂O (dittmarite), and Mg(NH₄)₂H₂(PO₄)₂·4H₂O (schertelite). More preferably, the cured coating material comprises MgNH₄PO₄·6H₂O (struvite).

The curable protective coating material may further comprise one or more additives, such as those described herein.

Preferably, the protective coating material has a total water content of 20-80 % by total weight of the protective coating material, such as 25-70 %, 30-60 %, or 35-50 %.

The curable coating material is a protective coating material. The curable protective coating material is able to provide protection to the object coated with the curable protective coating material. For example, the curable protective coating material may provide protection from, water; fire; corrosion; environmentally induced deterioration, *etc.* In particular, the curable protective coating material may be able to withstand the effects of (severe) environmental conditions, such as humid or dry air, and temperatures from below 0 °C to above 25 °C. Preferably, the curable protective coating material is flame-retardant.

To provide a surface with a protective coating of the invention, various methods are possible. The method should at least include that the curable protective coating material is brought into contact with the adhesive primer material at a given moment in time. The adhesive primer material is applied to a surface to be coated, before applying the curable protective coating material. The adhesive primer material is suitably left to cure for a period of time of 4 to 24 hours, such as 6 to 20 hours, 8 to 16 hours or 10 to 12 hours, prior to applying the curable protective coating material. The exact curing time depends on the nature of the adhesive primer material. In this context acrylate based primer materials are preferred, because they cure relatively fast. Polyurethane based primer materials on the other hand cure by moisture. The curing time is then typically dependent on the relative humidity, which makes handling more difficult.

The curable protective coating material has two components, *i.e.* the phosphate compound component and the alkali metal compound component, which components are combined during application of the curable coating material onto the applied adhesive primer material. The adhesive primer material and/or the curable protective coating material can be applied by, for example, spraying and/or casting. In a preferred embodiment, the phosphate compound component and the alkali metal compound component of the curable protective coating material are applied onto the layer of adhesive primer material simultaneously. This will ensure that the phosphate compound and the alkali metal compound do not react prior to application, thereby maintaining full reactivity, but that these compounds can react as soon as the materials are applied onto the surface. Due to the simultaneous application of both components, there is optimal mixing resulting in a homogeneous distribution of the chemicals. This in turn results in improved adhesion.

Regardless of how the adhesive primer material and the curable protective coating material are applied, it typically is important to obtain uniform layer thicknesses. In the case of casting, rollers and/or sliders can for example be used to reach such a result. For spraying, any suitable type of pump can be used, particularly a plunger pump or a worm pump (screw pump). Also, the spraying may be performed air-assisted and/or airless. Once the curable protective coating material is applied to the layer of adhesive primer material, it is cured, preferably upon exposure to water, thereby yielding a cured protective coating system, that has excellent adhesion to the surface and provides protection *e.g*. against water, fire, corrosion, environmentally induced deterioration, *etc.* The curing may initiate the acid-base reaction in the protective coating, as well as a reaction between the oxygen-containing magnesium compound in the adhesive primer material and the phosphate compound in the curable protective coating material.

In a further aspect, the invention is directed to a method of coating a surface, preferably of a roof or facade, comprising:
(i) applying an adhesive primer material, preferably as described herein, which comprises an oxygen-containing magnesium compound, to the surface to form a layer of adhesive primer material;
(ii) applying a curable protective coating material, preferably as described herein, which comprises a phosphate compound and an alkali metal compound, onto the adhesive primer material to form a layer of curable protective coating material; and
(ii) optionally curing the curable protective coating material, preferably by exposing to water, such as by spraying.

Suitably, the layer of adhesive primer material applied to the surface may be cured after step (i) and before step (ii), typically by exposure to air for a period of time, such as from 4 to 24 hours, from 6 to 20 hours, from 8 to 16 hours, or from 10 to 12 hours.

Preferably, step (ii) comprises (iia) mixing a phosphate compound component and an alkali metal compound component of the curable protective coating material, and (iib) applying the mixture of phosphate compound component and alkali metal compound component onto the adhesive primer material. Steps (iia) and (iib) are preferably performed within 60 seconds from each other, more preferably within 30 seconds from each other, more preferably within 10 seconds from each other, and most preferably, steps (iia) and (iib) are performed simultaneously. This will ensure optimal mixing of the adhesive primer material and the curable protective coating material. Not only does this increase adhesion, but in addition it improves the curing.

Applying the phosphate compound component and the alkali metal compound component of the curable protective coating material may involve the use of, *e.g.* a static mixer, an impingement mixing chamber, or a mixing pump. The phosphate compound component and the alkali metal compound component may also be combined in a spray nozzle. Preferably, the phosphate compound component and the alkali metal compound component are applied by spraying.

The method may further comprise a step of preparing the adhesive primer material. The adhesive primer material can be prepared by mixing a commercially bought primer material with an oxygen-containing magnesium compound in an amount as described herein. The oxygen-containing magnesium compound can be in slurry form, but preferably powder form. The mixing can be performed with a high shear disperser at, for example, 1500-2000 rotations per minute for 5 to 10 min.

The adhesive primer material is applied to a surface. The adhesive primer material can be applied by, for example, spraying and/or casting. If the adhesive primer material is applied to the surface by spraying, a plunger pump or a worm pump (screw pump) may be used. The spraying may be performed air-assisted and/or airless. The surface can be any surface of an object in architecture or construction, including infrastructure and building construction, such as residential and non-residential buildings. In particular, the surface can be a surface of facades, floors, walls, roofs, roads, pipes, and the like. Such surfaces can be cladded with any type of cladding material and/or coated with any type of coating material, before the adhesive primer material is applied. Preferably, the surface is of a facade or roof. The surface can be of a roof cladded with a roofing material. The roof, such as the roofing material, can comprise one or more selected from the group consisting of bitumen, polymer modified bitumen, polyvinyl chloride, polychloroprene, ethylene propylene diene monomer, chlorinated polyethylene, thermoplastic polyolefin, chlorosulphonated polyethylene, and the like.

It is preferred that the surface to be coated is first cleaned in order to optimise the bonding of the coating system of the invention. It is not necessary to abrade or acid etch a surface, although a wash with phosphoric acid (or other acids such as trisodium phosphate) or sodium hydroxide or potassium hydroxide solutions does tend to enhance bonding. Attaching an electrical charge to the substrate or the substrate wetting solution along with an opposite charge imparted on the slurry being applied increases adhesion. Including a magnetic ingredient, such as iron oxide or the like, into the wetting solution on the substrate and/or in to the slurry to be applied cn also increase adhesion.

Adhesion may be further improved by pre-treating the surface, such as with sulphamic, sulphuric, muriatic or hydrochloric acids. Likewise, roughening the surface may also enhance adhesion. Additionally, unlike surface charges may be imparted to the substrate and the coating to further enhance adhesion therebetween.

The curable protective coating material is preferably as described herein. The curable protective coating material is applied to the adhesive primer material on the surface. The curable protective coating material can be applied by, for example, spraying and/or casting. If the curable protective coating material is applied to the surface by spraying, a plunger pump or a worm pump (screw pump) may be used. The spraying may be performed air-assisted and/or airless.

The curable protective coating material may form a layer on top of the adhesive primer material. The layer may have a thickness of 0.5-5 mm, preferably 1-4 mm, such as 2-3 mm.

Once applied to the adhesive primer material, the curable protective coating material may be cured. In particular, the curable protective coating material may be cured by exposing to water. The curing can, for example, be performed at ambient conditions, such as room temperature. The curable protective coating material can be exposed to water by, for example, spraying water over the curable protective coating material. The person skilled in the art knows that the amount of water can be varied within a reasonable range to optimise the performance of the cured protective coating (setting time and strength).

The amount of water to be used for the water-curing is typically 10 % or more, based on total dry weight of the phosphate compound or, if the alkaline metal compound is present, the phosphate compound and alkaline metal compound combined, such as 15 % or more, or 20 % or more. The upper limit for the amount of water is less critical, but may generally be 50 % or less, based on total dry weight of the phosphate compound or, if the alkaline metal compound is present, the phosphate compound and alkaline metal compound combined, such as 40 % or less, or 35 % or less. One generally tries to make the material as flowable as possible using the least amount of water.

In a further aspect, the invention is directed to a protective coating formed from the coating system of the invention, comprising a layer of the adhesive primer material and a cured layer of the curable protective coating material. In other words, the protective coating is the cured form of the curable coating system described herein.

In a further aspect, the invention is directed to a coated surface obtainable by the method of the invention.

In yet a further aspect, the invention is directed to an object, preferably a roof or facade, comprising the protective coating of the invention.

The object may be any object as described herein, but preferably a roof or facade. The protective coating may form the outermost layer, or exposed surface, of the object, such as of a roof or facade. The roof may comprise a cladding material, or roofing. In that case, the roofing may be between the roof structure (e.g., framing, insulation, and covering), and the protective coating.

The roof or facade may further comprise one or more selected from the group consisting of bitumen, polymer modified bitumen, polyvinyl chloride, polychloroprene, ethylene propylene diene monomer, chlorinated polyethylene, thermoplastic polyolefin, chlorosulphonated polyethylene, and the like.

In a further aspect, the invention is directed to an adhesive primer material, comprising:
- one or more synthetic resins selected from the group consisting of acrylic resins and polyurethane resins; and
- an oxygen-containing magnesium compound, preferably selected from magnesium oxide, magnesium hydroxide, magnesium carbonate, or a magnesium alcoholate, more preferably magnesium oxide or magnesium hydroxide,
wherein the adhesive primer material comprises 15 % or more of the oxygen-containing magnesium compound by total weight of the adhesive primer material, preferably 20 % or more.

The adhesive primer material can comprise one or more resins as described herein, especially one or more synthetic resins. The synthetic resins may be selected from acrylic resins and polyurethane resins. The one or more synthetic resins may be acrylic resins, or polyurethane resins.

The adhesive primer material comprises 15 % or more of the oxygen-containing magnesium compound by total weight of the adhesive primer material. Preferably, the amount of oxygen-containing magnesium compound in the adhesive primer material is 20 % or more by total weight of the adhesive primer material, such as 20-40 % or 23-35 %.

In a further aspect, the invention is directed to an insulation assembly, comprising an insulation element having on a side the protective coating of the invention, wherein the adhesive primer material is present between the insulation element and the cured protective coating material, and the cured protective coating material is in direct contact with the adhesive primer material.

The insulation element may further comprise one or more materials having a thermal conductivity expressed as lambda (λ) value of 0.50 W·m⁻¹·K⁻¹ or less. The lambda value of the one or more materials can be 0.45 W·m⁻¹·K⁻¹ or less, such as 0.40 W·m⁻¹·K⁻¹, 0.35 W·m⁻¹·K⁻¹, or 0.30 W·m⁻¹·K⁻¹ or less, and/or 0.005 W·m⁻¹·K⁻¹ or more, such as 0.010 W·m⁻¹·K⁻¹ or more, 0.015 W·m⁻¹·K⁻¹ or more, or 0.020 W·m⁻¹·K⁻¹ or more. In particular, the element comprises one or more materials having a lambda value of 0.30 W·m⁻¹·K⁻¹ or less and/or 0.01 W·m⁻¹·K⁻¹ or more, such as 0.015-0.25 W·m⁻¹·K⁻¹. Preferably, the one or more materials have a lambda value of 0.20 W·m⁻¹·K⁻¹ or less and/or 0.02 W·m⁻¹·K⁻¹ or more, such as 0.025-0.18 W·m⁻¹·K⁻¹ or 0.03-0.15 W·m⁻¹·K⁻¹. The lambda value of a material can, for example, be determined according to ISO 10456:2008.

The insulation element may comprise one or more materials selected from the group consisting of polyisocyanurate, polyurethane, expanded polystyrene, extruded polystyrene, and the like. Preferably, the insulation element comprises expanded polystyrene. The invention has been described by reference to various embodiments, and methods. The skilled person understands that features of various embodiments and methods can be combined with each other.

The invention further relates to a kit of parts comprising (i) a container with an adhesive primer material comprising an oxygen-containing magnesium compound, (iia) a container comprising a phosphate compound component of a curable protective coating material comprising, and (iib) a container comprising an alkaline metal compound component of a curable protective coating material.

The use of the terms "a" and "an" and "the" and similar referents in the context of describing the invention (especially in the context of the claims) are to be construed to cover both the singular and the plural, unless otherwise indicated in this disclosure or clearly contradicted by context. The terms "comprising", "having", "including" and "containing" are to be construed as open-ended terms (*i.e.,* meaning "including, but not limited to") unless otherwise noted. Recitation of ranges of values in this disclosure are merely intended to serve as a shorthand method of referring individually to each separate value falling within the range, unless otherwise indicated in this disclosure, and each separate value is incorporated into the specification as if it were individually recited in this disclosure. The use of any and all examples, or exemplary language (e.g., "such as") provided in this disclosure, is intended merely to better illuminate the invention and does not pose a limitation on the scope of the invention unless otherwise claimed. No language in the specification should be construed as indicating any non-claimed element as essential to the practice of the invention. For the purpose of the description and of the appended claims, except where otherwise indicated, all numbers expressing amounts, quantities, percentages, and so forth, are to be understood as being modified in all instances by the term "about". Also, all ranges include any combination of the maximum and minimum points disclosed and include any intermediate ranges therein, which may or may not be specifically enumerated in this disclosure.

When referring to a noun in the singular, the plural is meant to be included, or it follows from the context that it should refer to the singular only.

Preferred embodiments of this invention are described in this disclosure. Variation of those preferred embodiments may become apparent to those of ordinary skill in the art upon reading the foregoing description. The inventors expect skilled artisans to employ such variations as appropriate, and the inventors intend for the invention to be practiced otherwise than as specifically described in this disclosure. Accordingly, this invention includes all modifications and equivalents of the subject-matter recited in the claims appended hereto as permitted by applicable law. Moreover, any combination of the above-described elements in all possible variations thereof is encompassed by the invention unless otherwise indicated in this disclosure or otherwise clearly contradicted by context. The claims are to be construed to include alternative embodiments to the extent permitted by the prior art.

For the purpose of clarity and a concise description, features are described in this disclosure as part of the same or separate embodiments, however, it will be appreciated that the scope of the invention may include embodiments having combinations of all or some of the features described.

Hereinafter, the invention will be illustrated in more detail by means of a specific example. However, the invention may be embodied in many different forms and should not be construed as being limited to the embodiments set forth in this disclosure. Rather, the example embodiment is provided so that this description will be thorough and complete, and will fully convey the scope of the invention to those skilled in the art.

### Example

### Shear strength of adhesive primers

Shear strengths of two adhesive primers were determined, one of which being a polyurethane primer that had been enriched with magnesium hydroxide such that it comprised about 20 % of magnesium hydroxide by total weight of the primer, whereas the other, comparative primer was the polyurethane primer as-is. The layer of adhesive primer was covered by a layer of curable protective coating material containing potassium phosphate and magnesium oxide in a weight ratio of 1 : 1. The shear strength of the enriched primer was about 0.34 N/mm², whereas the shear strength of the comparative primer was below about 0.08 N/mm².

## Claims

1. Coating system, comprising:
- an adhesive primer material comprising an oxygen-containing magnesium compound; and
- a curable protective coating material comprising a phosphate compound and an alkaline metal compound.

2. Coating system according to claim 1, wherein the alkaline metal compound, is an alkaline earth metal, such as magnesium.

3. Coating system according to claim 1 or 2, wherein the oxygen-containing magnesium compound and/or the alkaline metal compound comprise one or more selected from the group consisting of metal oxides; metal hydroxides; metal carbonates; or metal alcoholates, preferably metal hydroxides.

4. Coating system according to any one of claims 1-3, wherein the alkaline metal compound is selected from the group consisting of a magnesium oxide, a magnesium hydroxide and a magnesium alcoholate.

5. Coating system according to any one of claims 1-4, wherein the phosphate compound is an acidic phosphate compound, preferably a salt of phosphoric acid, such as an orthophosphate, a hydrogen phosphate or a dihydrogen phosphate.

6. Coating system according to any one of claims 1-5, wherein the adhesive primer material comprises 5 % or more of oxygen-containing magnesium compound by total weight of the adhesive primer material, preferably 10 % or more, more preferably 20 % or more.

7. Coating system according to any one of claims 1-6, wherein the adhesive primer material further comprises a synthetic resin, preferably comprising one or more selected from the group consisting of acrylic resins, epoxy resins and polyurethane resins.

8. Coating system according to any one of claims 1-7, wherein the curable protective coating material is water-curable.

9. Coating system according to any one of claims 1-8, wherein the curable protective coating material comprises a flame-retardant.

10. Protective coating formed from a coating system according to any one of claims 1-9, comprising a layer of the adhesive primer material and a cured layer of the curable protective coating material.

11. Method of coating a surface, preferably of a roof or facade, comprising:
(i) applying an adhesive primer material, which comprises an oxygen-containing magnesium compound, to the surface, wherein preferably the adhesive primer material is as defined in any one of claims 1, 3, 6 and 7;
(ii) applying a curable protective coating material, which comprises a phosphate compound and an alkali metal compound, to the adhesive primer material, wherein preferably the curable protective coating material is as defined in any one of claims 1-5, 8 and 9; and
(iii) optionally curing the curable protective coating material, preferably by exposing to water, such as by spraying.

12. Method of coating a surface according to claim 11, wherein step (ii) comprises
(iia) mixing a phosphate compound component and an alkali metal compound component of the curable protective coating material, and
(iib) applying the mixture of phosphate compound component and alkali metal compound component onto the adhesive primer material,
wherein steps (iia) and (iib) are performed within 60 seconds from each other, more preferably within 30 seconds from each other, more preferably within 10 seconds from each other, and most preferably, steps (iia) and (iib) are performed simultaneously.

13. Object, preferably a roof or facade, comprising a protective coating according to claim 10 or a protective coating obtainable by a method according to claim 11 or 12.

14. Adhesive primer material, comprising:
- one or more synthetic resins selected from the group consisting of acrylic resins and polyurethane resins; and
- an oxygen-containing magnesium compound, preferably selected from magnesium oxide; magnesium hydroxide; magnesium carbonate; or a magnesium alcoholate, more preferably magnesium oxide or magnesium hydroxide,
wherein the adhesive primer material comprises 15 % or more of the oxygen-containing magnesium compound by total weight of the adhesive primer material, preferably 20 % or more.

15. Insulation assembly, comprising an insulation element having on a side a protective coating according to claim 10, wherein the adhesive primer material is present between the insulation element and the cured protective coating material, and the cured protective coating material is in direct contact with the adhesive primer material,
wherein the insulation element preferably comprises one or more materials having a lambda value of 0.50 W·m⁻¹·K⁻¹ or less, preferably selected from the group consisting of polyisocyanurate; polyurethane; expanded polystyrene; and extruded polystyrene, more preferably expanded polystyrene.
